# EUROPEAN PATENT APPLICATION

(11) **EP 3 051 423 A1**
(43) Date of publication of application: **03.08.2016**
(21) Application number: 16153167.8
(22) Date of filing: 28.01.2016
(51) Int. Cl.: G06F 13/38, G06F 13/40

(54) **A DEVICE WITH AN AUDIO PORT CHANGEABLE BETWEEN DATA PATHS**

(30) Priority: 30.01.2015 US 201514610340
(71) Applicant: BlackBerry Limited, Waterloo, ON N2K 0A7 (CA)
(72) Inventor: ABDELSAMIE, Ahmed, Ottawa, Ontario K2J 0C9 (CA); ALMALKI, Nazih, Waterloo, Ontario N2T 1Z3 (CA); ROSE, Scott Douglas, Waterloo, Ontario N2K 4H5 (CA)
(74) Representative: MERH-IP Matias Erny Reichl Hoffmann Patentanwälte PartG mbB

(57) **Abstract**

A device for changing communications of an audio port between an applications processor and an audio processor is provided. The device comprises: an audio port configured to connect with an external accessory; an applications processor configured to implement a digital communication protocol; an audio processor configured to process audio data; and, a switch configured to change communications of the audio port between the applications processor and the audio processor based on an electrical configuration of the audio port, the electrical configuration changing according to the external accessory.

## Description

### FIELD

The specification relates generally to audio ports, and specifically to a method, system and device for changing communications of an audio port between an applications processor and an audio processor.

### BACKGROUND

Devices generally connect with accessories using data ports that are specifically configured for such connections, for example USB (universal serial bus) ports. However, use of many such data ports requires a dedicated processor, for example a USB processor, in order to handle communications on that port, dedicated processor being both on a device and a connected accessory, in addition to an applications processor. The use of such additional processors can be expensive, especially with general downward pressure to reduce cost of such accessories.

### BRIEF DESCRIPTIONS OF THE DRAWINGS

For a better understanding of the various implementations described herein and to show more clearly how they may be carried into effect, reference will now be made, by way of example only, to the accompanying drawings in which:
Fig. 1 depicts a device configured for changing communications of an audio port between an applications processor and an audio processor, according to non-limiting implementations.
Fig. 2 depicts a schematic block diagram of a system which includes the device of Fig. 1, according to non-limiting implementations.
Fig. 3 depicts a block diagram of a flowchart of a method for changing communications of an audio port between an applications processor and an audio processor, according to non-limiting implementations.
Fig. 4 depicts the device determining an electrical configuration of an audio port, according to non-limiting implementations.
Fig. 5 depicts a switch of device changing communications of the audio port to an applications processor based on an electrical configuration of the audio port, according to non-limiting implementations.
Fig. 6 depicts a switch of device changing communications of the audio port to an audio processor based on an electrical configuration of the audio port, according to non-limiting implementations.

### DETAILED DESCRIPTION

In general, this disclosure is directed to a device that includes an audio port, for example a 3.5 mm audio port, and a switch configured to change communications with the audio port between an audio processor and an applications processor, the applications processor configured to implement a digital communication protocol that is processor independent, for example an I2C (Inter-Integrated Circuit) protocol. The switch changes the communications based on an electrical configuration of the audio port that is, in turn, affected by an accessory to which the audio port is connected. For example, the audio port can be connected to an audio device, such as headphones and the like, or the audio port can be connected to an external accessory that operates according to the digital communications protocol that is specifically different from an audio protocol and processor independent. The switch changes between the audio processor and the applications processor depending on whether a connected accessory is an audio accessory or a non-audio accessory; the decision to change between the audio processor and the applications processor can be based on the electrical configuration of the pins of the audio port, which in turn depends on the nature of the connected accessory. The applications processor is generally configured to implement a data communications protocol when the applications processor is connected to the audio port using the switch, but is not dedicated to implementing the data communications protocol; for example, the applications processor can also be configured to communicate with other components of the device to control those other components.

In this specification, reference may be made herein to the terms program material, sound data and audio data which can refer to data used to drive a speaker and/or a loudspeaker including, but not limited to, voice data, music data, video data, and the like. In other words program material, sound data and audio data as used interchangeably herein can refer to sound data and/or sound files which can be processed to produce an input signal to a loudspeaker and/or a speaker. In some instances, the terms program material, sound data and audio data, however, will be used colloquially and interchangeably with the terms input signal and output signal, signifying that the program material, sound data and/or audio data is used to produce an input signal to a loudspeaker and/or an output signal that drives the loudspeaker, the output signal comprising a filtered version of the input signal.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, ZZ, and the like). Similar logic can be applied for two or more items in any occurrence of "at least one ..." and "one or more..." language.

An aspect of the specification provides a device comprising: an audio port configured to connect with an external accessory; an applications processor configured to implement a digital communication protocol; an audio processor configured to process audio data; and, a switch configured to change communications of the audio port between the applications processor and the audio processor based on an electrical configuration of the audio port, the electrical configuration changing according to the external accessory.

The applications processor can be further configured to control the switch based on the electrical configuration of the audio port.

The digital communication protocol can comprise I2C (Inter-Integrated Circuit).

The audio port can comprise a 3.5 mm audio port.

The switch can be configured to change communications of the audio port to the applications processor when the electrical configuration of the audio port indicates that the external accessory operates according to the digital communication protocol.

The device can further comprise a power supply, and the switch can be configured to connect the power supply to a pin of the audio port when the electrical configuration of the audio port indicates that the external accessory operates according to the digital communication protocol.

The switch can be configured to change communications of the audio port to the audio processor when the electrical configuration of the audio port indicates that the external accessory operates according to a protocol compatible with the audio processor.

The electrical configuration of the audio port can be determined from an electrical state of pins of the audio port.

The device can further comprise a memory storing possible electrical states of pins of the audio port, and the electrical configuration of the audio port can be determined by comparing an electrical state of the pins of the audio port with the possible electrical states of the pins of the audio port.

Another aspect of the specification provides a method comprising: at a device comprising: an audio port configured to connect with an external accessory; an applications processor configured to implement a digital communication protocol; an audio processor configured to process audio data; and, a switch configured to change communications of the audio port between the applications processor and the audio processor, changing, using the switch, communications of the audio port to the applications processor when an electrical configuration of the audio port indicates that the external accessory operates according to the digital communication protocol; and, changing, using the switch, the communications of the audio port to the audio processor when the electrical configuration of the audio port indicates that the external accessory operates according to a protocol compatible with the audio processor.

The switch can changes the communications of the audio port based on the electrical configuration of the audio port, the electrical configuration changing according to the external accessory.

The method can further comprise the applications processor controlling the switch to change the communications based on the electrical configuration of the audio port.

The digital communication protocol can comprise I2C (Inter-Integrated Circuit).

The audio port can comprise a 3.5 mm audio port.

The device can further comprise a power supply, and the method can further comprise: connecting the power supply to a pin of the audio port when the electrical configuration of the audio port indicates that the external accessory operates according to the digital communication protocol.

The electrical configuration of the audio port can be determined from an electrical state of pins of the audio port.

The device can further comprise a memory storing possible electrical states of pins of the audio port, and the method can further comprise determining the electrical configuration of the audio port by comparing an electrical state of the pins of the audio port with the possible electrical states of the pins of the audio port.

A further aspect of the invention provides a computer program product, comprising a computer usable medium having a computer readable program code adapted to be executed to implement a method comprising: at a device comprising: an audio port configured to connect with an external accessory; an applications processor configured to implement a digital communication protocol; an audio processor configured to process audio data; and, a switch configured to change communications of the audio port between the applications processor and the audio processor, changing, using the switch, communications of the audio port to the applications processor when an electrical configuration of the audio port indicates that the external accessory operates according to the digital communication protocol; and, changing, using the switch, the communications of the audio port to the audio processor when the electrical configuration of the audio port indicates that the external accessory operates according to a protocol compatible with the audio processor. The computer usable medium can comprise a non-transitory computer usable medium.

The device can further comprise a power supply, and the method can further comprise: connecting the power supply to a pin of the audio port when the electrical configuration of the audio port indicates that the external accessory operates according to the digital communication protocol.

The device can further comprise a memory storing possible electrical states of pins of the audio port, and the method can further comprise determining the electrical configuration of the audio port by comparing an electrical state of the pins of the audio port with the possible electrical states of the pins of the audio port.

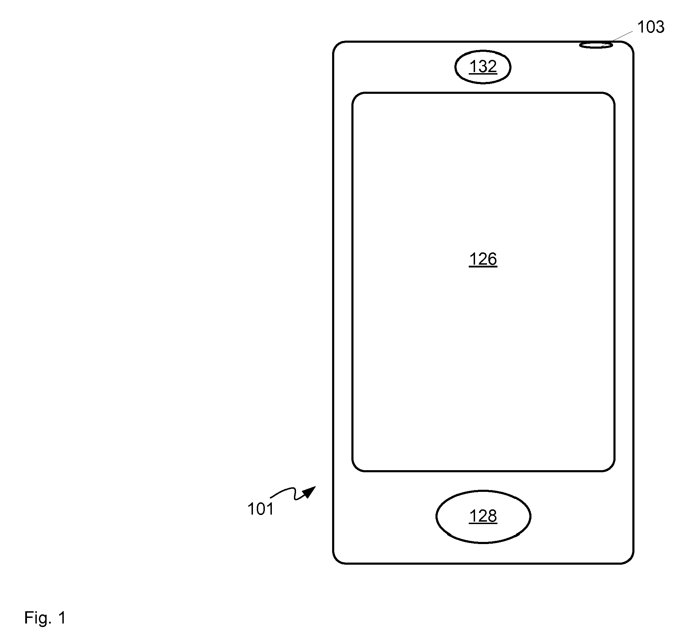

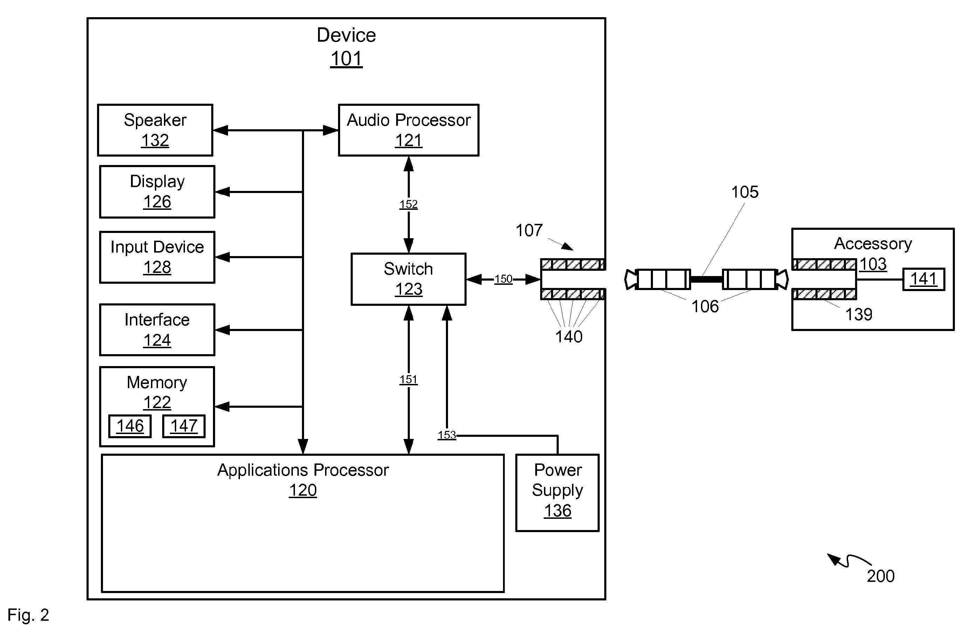

Attention is next directed to Fig. 1 and Fig. 2 which respectively depict a front perspective view and a schematic diagram of a mobile electronic device 101, referred to interchangeably hereafter as device 101, according to non-limiting implementations. Specifically, Fig. 2 depicts a system 200 that includes device 101, an accessory 103 external to device 101 (and interchangeably referred to as external accessory 103), and an audio cable 105, audio cable 105 comprising ends 106 configured to mate with audio ports of device 101 and accessory 103.

Device 101 comprises: an audio port 107 configured to connect with external accessory 103; an applications processor 120 configured to implement a digital communication protocol (applications processor 120 will be interchangeably referred to hereafter as processor 120); an audio processor 121 configured to process audio data; a switch 123 configured to change communications of audio port 107 between applications processor 120 and audio processor 121 based on an electrical configuration of audio port 107, the electrical configuration changing according to the external accessory 103. While optional, device 101 further comprises a communication interface 124 (interchangeably referred to hereafter as interface 124), an input device 128, and a speaker 132. Device 101 further comprises a power supply 136. While not depicted, device 101 can further comprise a microphone. In general, audio port 107 comprises an aperture and pins 140 (depicted in cross-section in Fig. 2) therein, audio port 107 configured to mate with an end 106 of audio cable 105; specifically, pins 140 are configured to mate with corresponding pins of an end 106 in a one-to-one relationship. However, in Fig. 2, neither end 106 of audio cable 105 is mated with audio port 107; in other words, as depicted components of system 200 are not mated with each other. Furthermore, in Fig. 1, an external aperture and/or input of audio port 107 is depicted as being on a top of a chassis of device 101, however the input of audio port 107 can be located at any position on device 101 that facilitates connection of audio cable 105 thereto.

Furthermore, while five pins 140 of audio port 107 (and/or ends 106) are depicted, a number of pins 140 can be greater than or less than five. Furthermore, one or more of pins 140 can comprise a pin configured to connect with shielding of audio cable 105.

Similarly, accessory 103 comprises an audio port 139 similar to audio port 107. In Fig. 2, neither end 106 of audio cable 105 is mated with audio port 139.

In implementations, where external accessory 103 comprises an accessory that operates according to the digital communication protocol, audio port 139 can be interconnected with an accessory processor 141 of accessory 103. In particular, accessory processor 131 is protocol independent in that processor 131 can process a digital communications protocol, including, but not limited to I2C, but is not dedicated to processing the digital communications protocol (i.e. unlike a USB processor which is dedicated to processing USB commands and/or data). In other words, accessory processor 131 is configured to process a digital communications protocol which is processor independent as well as functionality and/or applications of accessory 103. In these implementations, (though not depicted), accessory 103 can further comprise sensors, devices, and combinations thereof, having specialized functions, for example heart monitors, clocks, joysticks and the like. Indeed, accessory 103 can comprise any suitable combination of heart monitors accessories, clock accessories (including, but not limited to, an alarm clock accessory), a joystick accessory, a watch accessory, and the like, with sensors and/or devices having specialized functionality depending on the functionality of accessory 103.

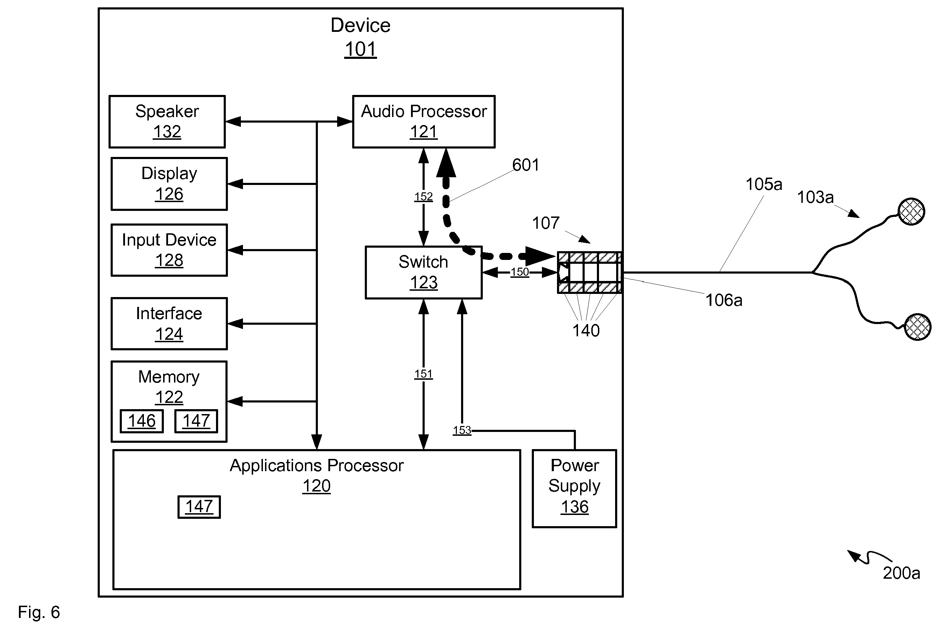

However, in other implementations processor 141 can be optional and/or not present at accessory 103. Furthermore, in some of these implementations, accessory 103 can comprise an audio accessory and/or an accessory that operates according to a protocol compatible with audio processor 121 (for example see accessory 103a depicted in Fig. 6, described below). In such implementations, accessory 103 can comprise headphones, speakers, and the like.

As depicted, audio cable 105 comprises a 3.5 mm audio cable, with 3.5 mm ends and/or audio jacks, having five pins each (though the fifth pin can comprise a connection to shielding of the 3.5 mm audio cable).

In some implementations, audio cable 105 can be integrated with accessory 103; for example, in these implementations, audio cable 105 can extend from accessory 103, and audio cable 105 has one end 106 for mating with device 101, with the opposite end being connected and/or permanently connected with accessory 103. In other words, in these implementations, accessory 103 does not have an audio port 139, but rather audio cable 105 permanently extends there from.

Device 101 can be any type of electronic device that can be used in a self-contained manner to communicate with accessory 103 and/or one or more communication networks. Device 101 can include, but is not limited to, any suitable combination of electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, e-readers, internet-enabled appliances and the like. Other suitable devices are within the scope of present implementations. For example, device 101 need not comprise a mobile communication device, but rather can comprise a device with specialized functions, which can be implemented in association with accessory 103.

It should be emphasized that the shape and structure of device 101 in Figs. 1 and 2 are purely examples, and contemplate a device that can be used for both wireless voice (e.g. telephony) and wireless data communications (e.g. email, web browsing, text, and the like). However, Fig. 1 contemplates a device that can be used for any suitable specialized functions, including, but not limited, to one or more of, telephony, computing, appliance, and/or entertainment related functions.

With reference to Figs. 1 and 2, device 101 comprises at least one input device 128 generally configured to receive input data, and can comprise any suitable combination of input devices, including but not limited to a keyboard, a keypad, a pointing device (as depicted in Fig. 1), a mouse, a track wheel, a trackball, a touchpad, a touch screen and the like. Other suitable input devices are within the scope of present implementations.

Input from input device 128 is received at processor 120 (f which can be implemented as a plurality of processors, including but not limited to one or more central processors (CPUs)). Processor 120 can further comprise one or more hardware processors. Processor 120 is configured to communicate with a memory 122 comprising a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 101 as described herein are typically maintained, persistently, in memory 122 and used by processor 120 which makes appropriate utilization of volatile storage during the execution of such programming instructions. Those skilled in the art will now recognize that memory 122 is an example of computer readable media that can store programming instructions executable on processor 120. Furthermore, memory 122 is also an example of a memory unit and/or memory module.

Processor 120 is generally configured to implement a data communications protocol when processor 120 is connected to audio port 107 using switch 123, but is not dedicated to implementing the data communications protocol; for example, processor 120 can also be configured to communicate with other components of device 101 to control those other components, as described below.

Memory 122 further stores an application 146 that, when processed by processor 120, enables processor 120 to control switch 123 to change communications of audio port 107 between applications processor 120 and audio processor 121 based on an electrical configuration of audio port 107, the electrical configuration changing according to external accessory 103. However, processor 120 can comprise a module and/or a hardware module and/or have specialized functionality for controlling switch 123 to change communications of audio port 107 between applications processor 120 and audio processor 121 based on an electrical configuration of audio port 107, the electrical configuration changing according to external accessory 103, and the like. Alternatively device 101 can comprise hardware and/or circuitry dedicated to controlling switch 123 to change communications of audio port 107 between applications processor 120 and audio processor 121 based on an electrical configuration of audio port 107, the electrical configuration changing according to external accessory 103, and the like.

Furthermore, memory 122 storing application 146 is an example of a computer program product, comprising a non-transitory computer usable medium having a computer readable program code adapted to be executed to implement a method, for example a method stored in application 146.

Memory 122 can further store data 147 comprising possible electrical states of pins 140 of audio port 107.

Switch 123 is generally configured to change communications of audio port 107 between processor 120 and audio processor 121 based on an electrical configuration of audio port 107, the electrical configuration changing according to accessory 103. In particular, switch 123 is configured to change connections from pins 140 between processor 120 and audio processor 121, as described in further detail below. In particular, while a connection 150 between switch 123 and audio port 107 is depicted as a single line, connection 150 can comprise any number of connections between pins 140 and switch 123, a number of connections 150 can be less than, equal to, or greater than a number of pins 140. Similarly, a data path 151 between switch 123 and processor 120 can comprise any number of connections between switch 123 and processor 120, and an audio path 152 between switch 123 and audio processor 121 can comprise any number of connections between switch 123 and audio processor 121. As depicted, power supply 136 is connected to switch 123 via a power path 153, such that switch 123 can connect power supply 136 to a pin 140 of audio port 107 when the electrical configuration of audio port 107 indicates that external accessory 103 operates according to the digital communication protocol. However, in other implementations, processor 120 can supply power to audio port 107 using data path 151; in these implementations, power path 153 is optional and/or not present in device 101. It is appreciated that each of connection 150, data path 151, audio path 152, and power path 153 comprise connections and/or electrical lines and/or electrical traces and/or data buses and/or electrical buses between the various components.

Furthermore, switch 123 can comprise a plurality of switches, each of which change a connection of a respective pin 140 of audio port 107 between a respective connections to processor 120 and audio processor 121.

In some implementations, data path 151 includes a control connection between processor 120 and switch 123, such that processor 120 can control switch 123 whether connected to audio port 107 or not. In other words, processor 120 can be configured to control switch 123, and in particular a connection state of switch 123, regardless of whether switch 123 is connecting audio port 107 with processor 120 or audio processor 121.

It is further noted that when audio cable 105 is not mated with audio port 107, switch 123 can connect applications processor 120 with audio port 107.

Audio processor 121 is generally configured to process audio data, for example audio data, sound data and/or program material stored at memory 122 (such as music and the like) and/or audio data generated by other components of device 101, and output the audio data to an audio accessory via audio port 107. For example, when accessory 103 comprises an audio accessory, such as headphones and the like, connected to audio port 107, audio processor 121 can process audio data and output an audio signal to audio port 107 so that accessory 103 can output sound in accordance with the audio data.

Processor 120 can be further configured to communicate with display 126, which comprises any suitable one of, or combination of, flat panel displays (e.g. LCD (liquid crystal display), plasma displays, OLED (organic light emitting diode) displays, capacitive or resistive touchscreens, CRTs (cathode ray tubes) and the like.

Processor 120 also connects to communication interface 124 (interchangeably referred to interchangeably as interface 124), which can be implemented as one or more radios and/or connectors and/or network adaptors, configured to wirelessly communicate with one or more communication networks (not depicted). It will be appreciated that interface 124 is configured to correspond with network architecture that is used to implement one or more communication links to the one or more communication networks, including but not limited to any suitable combination of USB (universal serial bus) cables, serial cables, wireless links, cell-phone links, cellular network links (including but not limited to 2G, 2.5G, 3G, 4G+ such as UMTS (Universal Mobile Telecommunications System), GSM (Global System for Mobile Communications), CDMA (Code division multiple access), FDD (frequency division duplexing), LTE (Long Term Evolution), TDD (time division duplexing), TDD-LTE (TDD-Long Term Evolution), TD-SCDMA (Time Division Synchronous Code Division Multiple Access) and the like, wireless data, Bluetooth links, NFC (near field communication) links, WLAN (wireless local area network) links, WiFi links, WiMax links, packet based links, the Internet, analog networks, the PSTN (public switched telephone network), access points, and the like, and/or a combination.

Power supply 136 can comprise, a battery, a power pack and the like; however, in other implementations, power supply 136 can comprise a connection to a mains power supply and/or a power adaptor (e.g. and AC-to-DC (alternating current to direct current) adaptor). Furthermore, power supply 136 powers components of device 101 including, but not limited to, processor 120, audio processor 121 etc. As depicted, power supply 136 is also connected to switch 123, which can be configured to switch power from power supply 136 to one of pins 140 as described below.

In some implementations, an output of power supply 136 to switch 123 and/or audio port 107 can be limited, for example by including components on power path 153, and the like, which limit an output of power supply 136 to a voltage and/or current and/or power compatible accessory 103. For example, in some implementations, an output voltage of power supply to audio port 107 can be limited to 3V. Indeed, in some implementations, when power supply 136 is connected to audio port 107, such a connection can include a reference ground and +3V rail voltage, which is compatible with I2C accessories. However other limiting voltages and/or limiting currents and/or limiting powers are within the scope of present implementations.

In some implementations, audio port 107 comprises a 3.5 mm audio port with four pins, though audio port 107 can include a connection to shielding of audio cable 105 which can hence be conceptually referred to as fifth pin. In these implementations audio port 139 is similar to audio port 107. Furthermore, in these implementations, audio cable 105 comprises a 3.5 mm audio cable and each of ends 106 comprises a 3.5 mm comprising four pins, with ends 106 further comprising a connection to the shielding of audio cable 105. Hence, four connections between audio port 107 and audio port 139 can occur using the four pins of ends 106, with a fifth connection occurring between audio port 107 and audio port 139 using the shielding of audio cable 105.

Processor 120 is generally configured to implement a digital communications protocol, for example when processor 120 and accessory 103 are in communication using switch 123. In some of these implementations, the digital communications protocol comprises I2C (Inter-Integrated Circuit), however other digital communications protocols that are not processor specific are within the scope of present implementations.

In some implementations, the 3.5 mm audio port can be combined with I2C. In these implementations, device 101 comprises: a 3.5 mm audio port configured to connect with an external accessory; an applications processor configured to implement I2C; an audio processor configured to process audio data; and, a switch configured to change communications of the 3.5 mm audio port between the applications processor and the audio processor based on an electrical configuration of the audio port, the electrical configuration changing according to the external accessory.

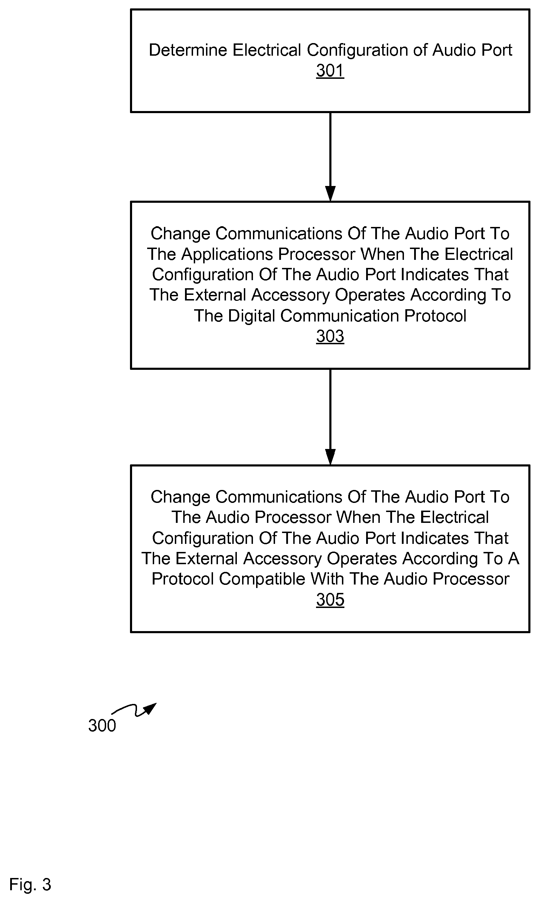

Attention is now directed to Figure 3 which depicts a block diagram of a flowchart of a method 300 of changing communications of an audio port between an applications processor and an audio processor, according to non-limiting implementations. In order to assist in the explanation of method 300, it will be assumed that method 300 is performed using device 101, and specifically by switch 123 of device 101, for example under control of processor 120 and when processor 120 processes application 146. Indeed, method 300 is one way in which device 101 can be configured. Furthermore, the following discussion of method 300 will lead to a further understanding of device 101, and its various components. However, it is to be understood that device 101 and/or method 300 can be varied, and need not work exactly as discussed herein in conjunction with each other, and that such variations are within the scope of present implementations.

Regardless, it is to be emphasized, that method 300 need not be performed in the exact sequence as shown, unless otherwise indicated; and likewise various blocks may be performed in parallel rather than in sequence; hence the elements of method 300 are referred to herein as "blocks" rather than "steps". It is also to be understood, however, that method 300 can be implemented on variations of device 101 as well.

At block 301, an electrical configuration of audio port 107 is determined. For example, processor 120 can query pins 140 when switch 123 is connects processor 120 and audio port 107, as described in detail below.

At block 303, communications of audio port 107 changes to applications processor 120 when the electrical configuration of audio port 107 indicates that external accessory 103 operates according to the digital communication protocol. In some implementations, block 303 can include connecting power supply 136 to a pin 140 of audio port 107 when the electrical configuration of audio port 107 indicates that external accessory 103 operates according to the digital communication protocol. In other implementations, power can be supplied to a pin of switch from processor 120.

At block 305, communications of audio port 107 changes to audio processor 12 when the electrical configuration of audio port 107 indicates that external accessory 103 operates according to a protocol compatible with the audio processor.

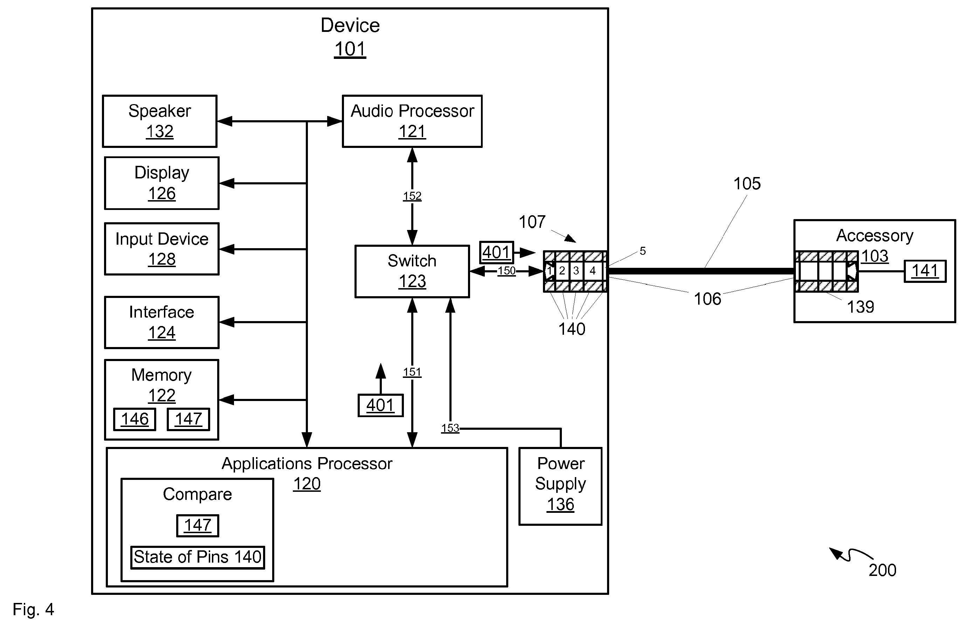

Method 300 is now described with reference to Figs. 4 to 6, each of which is substantially similar to Fig. 2 with like elements having like numbers, unless otherwise noted. However, in contrast to Fig. 2, in each of Figs. 4 to 6, audio cable 105 is mated with audio port 107.

Attention is next directed to Fig. 4 which depicts accessory 103 connected to device 101 using audio cable 105 with one end 106 of audio cable 105 is mated with audio port 107 while an opposite end 106 of audio cable 105 is mated with audio port 139.

Furthermore, as depicted, it is assumed that a default position of switch 123 is to connect audio port 107 with processor 120; in other words, as depicted, switch 123 is configured to connect audio port 107 with processor 120 when audio port 107 is not mated with audio cable 105 and/or not in communication with accessory 103. For example, when audio cable 105 is mated with audio port 107 but not with accessory 103, switch 123 behaves as if there is nothing mated with audio port 107.

In any event, as depicted, processor 120 can communicate with each pin 140 of audio port 107 to determine an electrical configuration of audio port 107. For example, processor 120 can electrically query 401 each of pins 140 to determine an electrical state of each pin 140 and compare the electrical states of pins 140 to data 147, as depicted in Fig. 4. The electrical state of each pin 140 will depend on which components each pin 140 is connected to in accessory 103. For 3.5 mm audio accessories with four pins (as numbered in Fig. 4) and shielding which can be referred to as pin 5, the electrical state of each pin 140 when connected to an accessory can be well defined, as shown in Table 1, which can be representative of data 147:

**TABLE 1**

| ACCESSORY | PIN1 | PIN2 | PIN3 | PIN4 | PIN5 |
|---|---|---|---|---|---|
| I2C | Float | Float | Float | Float | Short |
| Stereo (HP with Mic) | | | Ground | Mic | Open |
| | | | Mic | Ground | Open |
| Line Audio Cable | LOL | LOR | Ground | Ground | Open |
| Mono Headset | HPL | Ground | Ground | Mic | Open |
| | HPL | Ground | Mic | Ground | Open |
| | HPL | HPL | Ground | Mic | Open |
| | HPL | HPL | Mic | Ground | Open |
| | HPL | Float | Ground | Mic | Open |
| | HPL | Float | Mic | Ground | Open |
| Stereo Headphone | HPL | HPR | Ground | Ground | Open |
| | HPL | Float | Ground | Ground | Open |
| | Float | HPR | Ground | Ground | Open |
| Line Out Audio Cable | Cap/Float | LOR | Ground | Ground | Open |
| | LOL | Cap/Float | Ground | Ground | Open |
| Privacy Security Plug | Ground | Ground | Ground | Ground | Open |
| Stereo Extension Cable | Cap/Float | Cap/Float | Ground | Ground | Open |
| Unsupported | | | | | Open |

In Table 1, HP refers to headphones, Mic refers to a microphone, for example a microphone on a headphone, LOL refers to Lineout Left, LOR refers to Lineout Right, HPL refers to Headphone Left, and HPR refers to Headphone Right. In other words, the electrical state of each of pins 140 (i.e. PIN1, PIN2, PIN3, PIN4 and PIN5 (the shielding)), can depend on a connection to an accessory. For example, each of configurations from the row labeled Line Audio Cable to the row labeled Stereo Extension Cable operate according to protocols compatible with audio processor 121, while the I2C configuration in the first row operates according to I2C. Table 1, and/or data 147, can be populated at a factory and/or during a provisioning process.

Hence, by querying each pin 140, processor 120 can determine the electrical configuration of audio port 107 and/or the electrical state of each pin 140, and determine a type of accessory 103. For example, when PIN1 has an electrical state of LOL, PIN2 has an electrical state of LOR, PIN3 has an electrical state of Ground, PIN4 has an electrical state of Ground, PIN5 has an electrical state of Open, processor 120 can determine that accessory 103 comprises a Line Audio Cable by comparing the current electrical state of each pin 140 with data 147, as represented by Table 1. In other words, when the electrical state of pins 140 comprises any of configurations of Table 1, other than that of the first and last rows, it can be determined that an external accessory connected to device 101 using audio port 107 comprises an accessory that operates according to a protocol compatible with audio processor 121.

However, when PIN1 has an electrical state of Float, PIN2 has an electrical state of Float, PIN3 has an electrical state of Float, PIN4 has an electrical state of Float, PIN5 has an electrical state of Short, processor 120 can determine that accessory 103 comprises an I2C accessory (i.e. an accessory which operates according to the digital I2C communication protocol) by comparing the current electrical state of each pin 140 with data 147, as represented by Table 1. However, while it is assumed in Table 1, that the configuration in the first row corresponds to an I2C accessory, in other implementations, other digital communication protocols can be associated with a similar configuration, assuming the digital communication protocol is processor independent.

Hence, in Fig. 4, an electrical configuration of audio port 107 is determined from an electrical state of pins 140 of audio port 107. Furthermore, device 101 comprises memory 122 storing possible electrical states of pins of the audio port in data 147, and the electrical configuration of audio port 107 are determined by comparing an electrical state of pins 140 of audio port 107 with the possible electrical states of pins 140 of audio port 107 as represented by data 147.

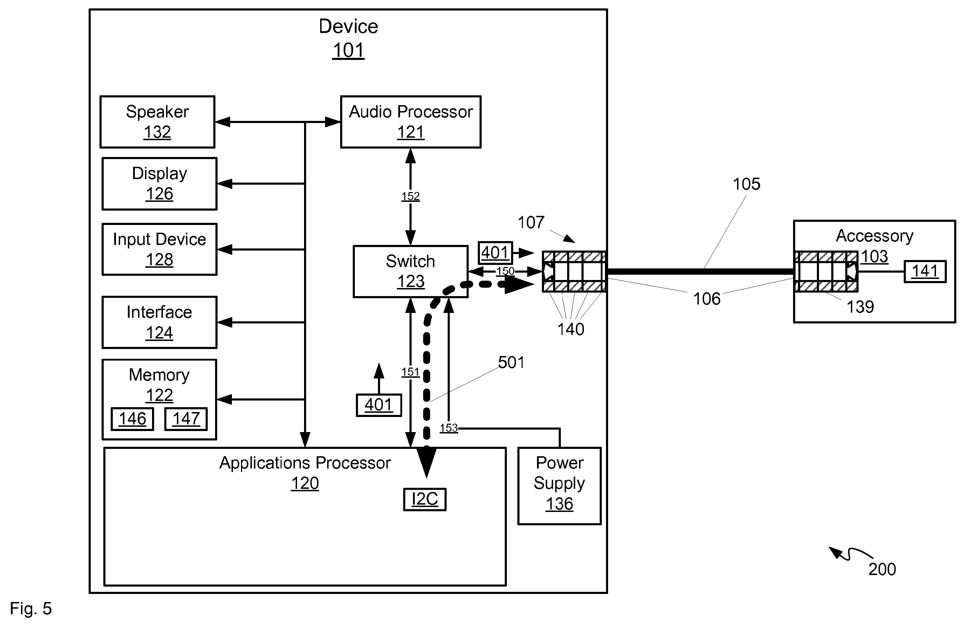

Turning to Fig. 5, and assuming that accessory 103 comprises an accessory which operates according to I2C, then as represented in Fig. 5 by communications 501, switch 123 is controlled to change communications of audio port 107 to processor 120, if not already connected thereto (e.g. block 301 of method 300). Similarly, switch 123 can connect at least one pin 140 of audio port 107 to power supply 136 (e.g. block 303 of method 300).

Furthermore, processor 120 can load and/or process data which enables processor 120 to communicate using I2C, as also depicted in Fig. 5.

While the description of Figs. 4 and 5 assume that processor 120 controls switch 123, in other implementations device 101 can comprise additional circuits and/or dedicated circuits which are specifically configured to query audio port 107 to determine an electrical configuration thereof and control switch 123 accordingly. In addition, while Fig. 4 depicts processor 120 comparing the electrical configuration of audio port 107 (i.e. a state of pins 140) to data 147 to determine a type of accessory 103, in other implementations, circuits configured to query audio port 107 to determine an electrical configuration thereof and control switch 123 accordingly can be hardwired to control switch 123 based on data 147.

Attention is next directed to Fig. 6 which depicts a system 200a similar to system 200 where accessory 103 and audio cable 105 have been replaced with accessory 103a which comprises headphones, an audio cable 105a and an end 106a, with audio cable 105a being substantially similar to audio cable 105 but having only one end 106a. Hence accessory 103a comprises an audio accessory which operates according to a protocol compatible with audio processor 121. For example, when electrical configuration of pins 140 is queried, it will be determined that the electrical configuration corresponds to a Stereo Headphone as shown in Table 1. Hence, processor 120 (and/or additional circuits and/or dedicated circuits) can control switch 123 to change communications of audio port 107 to audio processor 121, as represented in Fig. 6 by communications 601, as the electrical configuration of audio port 107 indicates that external accessory 103a operates according to a protocol compatible with audio processor 121. Accessory 103a can comprise a processor or may not comprise a processor, depending on the audio functionality of accessory 103a.

When accessory 103a is disconnected, switch 123 can return to a state depicted in Fig. 4, in which audio port 107 is again connected to and/or in communication with, processor 120. Indeed, in some implementations, switch 123 is configured to automatically change communications to processor 120 when an audio accessory is disconnected from audio port 107.

In any event, disclosed herein are a device, method and system for changing communications of an audio port between an applications processor and an audio processor based on an electrical configuration of the audio port which changes according to the nature of an accessory connected thereto. In specific implementations, the audio port comprises a 3.5 mm audio port, and the applications processor, when connected to the audio port, communicates with a connected accessory using I2C. Such a communications configuration can be used in place of communications protocols and ports which require a dedicated processor, such as USB ports and associated USB processors. Hence, lower cost accessories can be connected to devices using the 3.5 mm audio port present on many devices rather than a USB port, obviating use of USB processors, and the like, in such accessories.

Those skilled in the art will appreciate that in some implementations, the functionality of device 101 can be implemented using pre-programmed hardware or firmware elements (e.g., application specific integrated circuits (ASICs), electrically erasable programmable read-only memories (EEPROMs), etc.), or other related components. In other implementations, the functionality of device 101 can be achieved using a computing apparatus that has access to a code memory (not depicted) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, the computer-readable program can be stored as a computer program product comprising a computer usable medium. Further, a persistent storage device can comprise the computer readable program code. The computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A device comprising:
an audio port configured to connect with an external accessory;
an applications processor configured to implement a digital communication protocol;
an audio processor configured to process audio data; and,
a switch configured to change communications of the audio port between the applications processor and the audio processor based on an electrical configuration of the audio port, the electrical configuration changing according to the external accessory.

2. The device of claim 1, wherein the applications processor is further configured to control the switch based on the electrical configuration of the audio port.

3. The device of claim 1 or 2, wherein the digital communication protocol comprises I2C (Inter-Integrated Circuit).

4. The device of any previous claim, wherein the audio port comprises a 3.5 mm audio port.

5. The device of any previous claim, wherein the switch is configured to change communications of the audio port to the applications processor when the electrical configuration of the audio port indicates that the external accessory operates according to the digital communication protocol.

6. The device of any previous claim, further comprising a power supply, the switch configured to connect the power supply to a pin of the audio port when the electrical configuration of the audio port indicates that the external accessory operates according to the digital communication protocol.

7. The device of any previous claim, wherein the switch is configured to change communications of the audio port to the audio processor when the electrical configuration of the audio port indicates that the external accessory operates according to a protocol compatible with the audio processor.

8. The device of any previous claim, wherein the electrical configuration of the audio port is determined from an electrical state of pins of the audio port.

9. The device of any previous claim, further comprising a memory storing possible electrical states of pins of the audio port, the electrical configuration of the audio port determined by comparing an electrical state of the pins of the audio port with the possible electrical states of the pins of the audio port.

10. A method comprising:
at a device comprising: an audio port configured to connect with an external accessory; an applications processor configured to implement a digital communication protocol; an audio processor configured to process audio data; and, a switch configured to change communications of the audio port between the applications processor and the audio processor, changing, using the switch, communications of the audio port to the applications processor when an electrical configuration of the audio port indicates that the external accessory operates according to the digital communication protocol; and,
changing, using the switch, the communications of the audio port to the audio processor when the electrical configuration of the audio port indicates that the external accessory operates according to a protocol compatible with the audio processor.

11. The method of claim 10, wherein the switch changes the communications of the audio port based on the electrical configuration of the audio port, the electrical configuration changing according to the external accessory.

12. The method of claim 10 or 11, further comprising the applications processor controlling the switch to change the communications based on the electrical configuration of the audio port.

13. The method of any of claims 10 to 12, wherein the device further comprises a power supply, and the method further comprises: connecting the power supply to a pin of the audio port when the electrical configuration of the audio port indicates that the external accessory operates according to the digital communication protocol.

14. The method of any of claims 10 to 13, wherein the device further comprises a memory storing possible electrical states of pins of the audio port, and the method further comprises determining the electrical configuration of the audio port by comparing an electrical state of the pins of the audio port with the possible electrical states of the pins of the audio port.

15. A computer program product, comprising a non-transitory computer usable medium having a computer readable program code adapted to be executed to implement a method comprising:
at a device comprising: an audio port configured to connect with an external accessory; an applications processor configured to implement a digital communication protocol; an audio processor configured to process audio data; and, a switch configured to change communications of the audio port between the applications processor and the audio processor, changing, using the switch, communications of the audio port to the applications processor when an electrical configuration of the audio port indicates that the external accessory operates according to the digital communication protocol; and,
changing, using the switch, the communications of the audio port to the audio processor when the electrical configuration of the audio port indicates that the external accessory operates according to a protocol compatible with the audio processor.
